# FASCICULE DE BREVET EUROPEEN

(11) **EP 2 037 660 B1**
(45) Date de publication et mention de la délivrance du brevet: **29.12.2010**
(21) Numéro de dépôt: 07291098.7
(22) Date de dépôt: 13.09.2007
(51) Int. Cl.: H04M 1/05, A45F 5/00, H04B 1/38

(54) **Dispositif d'accrochage d'un appareil de communication téléphonique sans fil, tel qu'un téléphone cellulaire ou une oreillette**
Aufhängevorrichtung für eine drahtlose tragbare Telekommunikationsvorrichtung, wie Mobiltelefon oder Knopf im Ohr
Device for hanging a wireless telephone communication device, such as a cellular telephone or an earphone

(43) Date de publication de la demande: 18.03.2009
(73) Titulaire: ModeLabs Group SA, 75008 Paris (FR)
(72) Inventeur: Piocelle, Thierry, 33380 Mios (FR); Marie, Claude, 78310 Maurepas (FR); Rousselle, Nicolas, 85230 Bouin (FR)
(74) Mandataire: Chameroy, Claude

(56) Documents cités:
- EP-A- 0 751 629
- WO-A-03/061429
- US-A1- 2004 050 123

## Description

La présente invention concerne un dispositif d'accrochage d'un appareil de communication téléphonique sans fil, tel qu'un téléphone cellulaire ou une oreillette.

Actuellement, les oreillettes de communication téléphonique sans fil ne sont pas pourvues de moyens permettant de les accrocher par exemple à la ceinture d'un vêtement, une lanière de sac à main, un crochet de porte monnaie, ou un porte clé. Ceci peut constituer un inconvénient notamment lorsque l'utilisateur ne souhaite pas porter l'oreillette mais avoir facilement accès à celle-ci.

De même, seuls certains téléphones cellulaires sont pourvus d'une encoche permettant d'y passer un cordon d'accrochage. Mais ces cordons sont difficiles à introduire dans l'encoche, fragiles et peu esthétiques.

Le document US-A1-2004/0050123 montre un dispositif d'accrochage selon le préambule de la revendication 1.

Un but de la présente invention est donc de résoudre le problème cité précédemment à l'aide d'une solution simple à mettre en oeuvre, fiable et peu coûteuse.

Ainsi, la présente invention a pour objet un dispositif d'accrochage d'un appareil de communication téléphonique sans fil, tel qu'un téléphone cellulaire ou une oreillette, comportant :
- un corps principal, destiné notamment à être relié à une ceinture de vêtement ou une sangle de sac,
- un organe d'accrochage relié de manière amovible au corps principal et sur lequel est accroché l'appareil de communication, et
- un système de blocage/déblocage dudit organe d'accrochage,
ledit dispositif étant **caractérisé en ce que** le système de blocage/déblocage comporte au moins un premier et un second pistons coaxiaux coulissant dans un fourreau du corps principal, un ressort de compression reliant axialement les deux pistons et un moyen permettant l'éjection de l'organe d'accrochage ou le maintien de sa liaison au corps principal, l'éjection de l'organe d'accrochage étant provoquée par une pression axiale exercée sur le premier piston.

Selon des modes de réalisation préférés, le dispositif selon la présente invention peut comprendre en outre l'une au moins des caractéristiques suivantes :
- les deux pistons et l'organe d'accrochage sont coaxiaux et de section circulaire ;
- le moyen d'éjection/maintien est constitué par une lamelle ressort en métal disposée latéralement le long des pistons et localement sur un côté de l'organe d'accrochage, ladite lamelle ressort étant déformable élastiquement de manière radiale par rapport à ces derniers ;
- la lamelle ressort est fixée, à une de ses extrémités, sur le corps principal et présente, à son extrémité opposée, une première dent venant en prise avec un cran ménagé sur une surface périphérique de l'organe d'accrochage de manière à bloquer ce dernier en translation ;
- une seconde dent est prévue sur la lamelle ressort, entre les deux extrémités de cette dernière, pour permettre d'écarter ladite lamelle latéralement de l'organe d'accrochage suite à une pression axiale sur le premier piston ;
- le premier piston est un bouton poussoir de manipulation accessible par un utilisateur depuis l'extérieur du corps principal de sorte qu'une pression axiale sur le bouton pression provoque la libération de la première dent du cran et l'éjection de l'organe d'accrochage.
- le premier piston comporte un fût axial cylindrique autour duquel est placée une partie du ressort de compression, et le second piston présente un logement axial cylindrique recevant l'autre partie du ressort et à l'intérieur duquel peut coulisser ledit fût.
- le fourreau du corps principal présente une première butée pour le blocage axial arrière du premier piston et une seconde butée pour le blocage axial avant du second piston ; et
- l'organe d'accrochage est muni d'un anneau d'accrochage à son extrémité libre.

L'invention va maintenant être décrite plus en détail en référence à des modes de réalisation particuliers donnés à titre d'illustration uniquement et représentés sur les figures annexées dans lesquelles :
- la figure 1 est une vue en perspective du dispositif conforme à la présente invention dans un état décroché ;
- la figure 2 est une vue en perspective du dispositif dans un état accroché ;
- la figure 3 est une vue en perspective du dispositif en cours de décrochage ;
- la figure 4 est une vue en coupe du dispositif correspondant à la figure 1 ;
- la figure 5 est une vue en coupe du dispositif correspondant à la figure 2 ; et
- la figure 6 est une vue en coupe du dispositif correspondant à la figure 3.

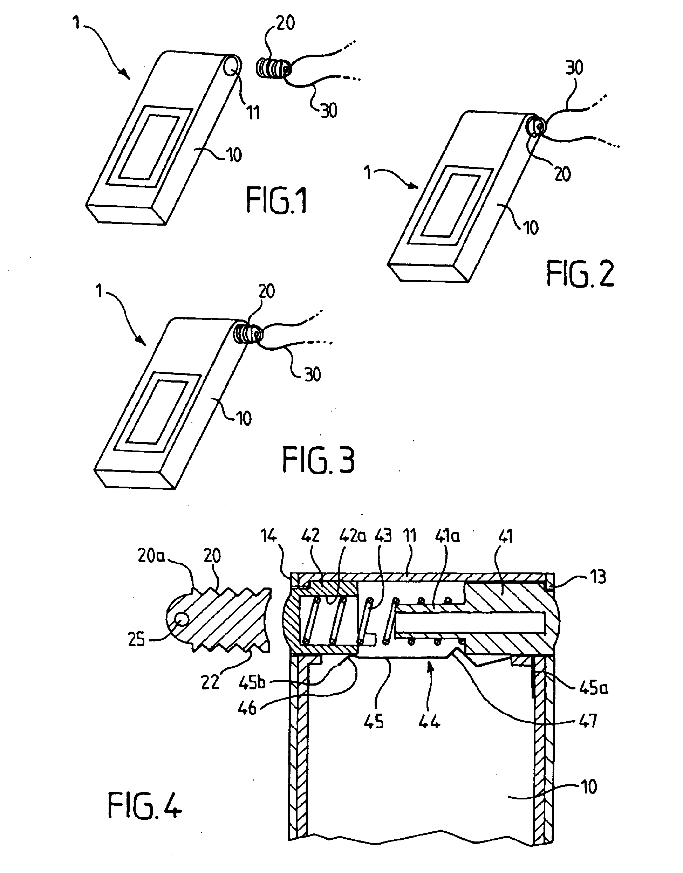

Les figures 1 à 3 montrent un dispositif 1 d'accrochage d'un appareil de communication téléphonique sans fil (non représenté) tel qu'une oreillette fonctionnant à la norme Bluetooth ou un téléphone cellulaire pouvant être jumelé à cette oreillette.

Ce dispositif d'accrochage 1 comporte un corps principal 10, prenant par exemple la forme d'un boîtier creux moulé en matière plastique, pouvant par exemple être clipsé sur une ceinture, relié à une sangle de sac ou rangé dans une poche de pantalon.

Le dispositif d'accrochage 1 comporte également un organe d'accrochage 20 pouvant être relié de manière amovible au corps principal 10 et sur lequel est accroché l'appareil de communication téléphonique sans fil, par exemple à l'aide d'un lien souple 30.

Sur la figure 1, le dispositif 1 est dans son état décroché, c'est-à-dire que l'organe d'accrochage 20 est détaché du corps principal 10. L'appareil de communication téléphonique sans fil est donc également détaché du corps principal 10, par exemple pour pouvoir être utilisé.

Sur la figure 2, le dispositif 1 est dans la position accroché, c'est-à-dire que l'organe d'accrochage 20 est attaché au corps principal 10. Cela permet ainsi d'accrocher un téléphone cellulaire ou une oreillette à un passant de ceinture de pantalon ou à une sangle de sac, tout en l'ayant facilement à portée de mains afin de pouvoir le/la détacher pour l'utiliser.

Enfin, sur la figure 3, le dispositif 1 est sur le point d'être dans son état décroché, c'est-à-dire que l'organe d'accrochage 20 est partiellement détaché du corps principal 10.

Les figures 4 à 6 sont des vues en coupe du dispositif d'accrochage 1 représenté respectivement sur les figures 1 à 3.

Le corps principal 10 comporte un fourreau interne creux 11 traversant toute sa largeur.

Ce fourreau 11 renferme un système de blocage/déblocage de l'organe d'accrochage 20.

Plus précisément, le système de blocage/déblocage comporte un premier piston 41, un second piston 42 coaxial au premier piston 41, les deux pistons étant de section circulaire et pouvant coulisser dans le fourreau 11. Un ressort de compression 43 relie axialement les deux pistons 41 et 42. Un moyen 44 permettant l'éjection de l'organe d'accrochage 20 ou le maintien de sa liaison au corps principal 10 est également prévu.

Le moyen d'éjection/maintien 44 est constitué par une lamelle ressort en métal 45 disposée latéralement et le long des deux pistons 41 et 42 et localement sur un côté de l'organe d'accrochage 20, la lamelle 45 étant déformable élastiquement de manière radiale par rapport à ces derniers.

La lamelle ressort 45 est fixée, à une de ses extrémités 45a, sur le corps principal 10 et présente, à son extrémité opposée 45b, une première dent 46 venant en prise avec un cran 22 ménagé sur une surface périphérique de l'organe d'accrochage 20 de manière à bloquer ce dernier en translation pour éviter son éjection du corps principal 10.

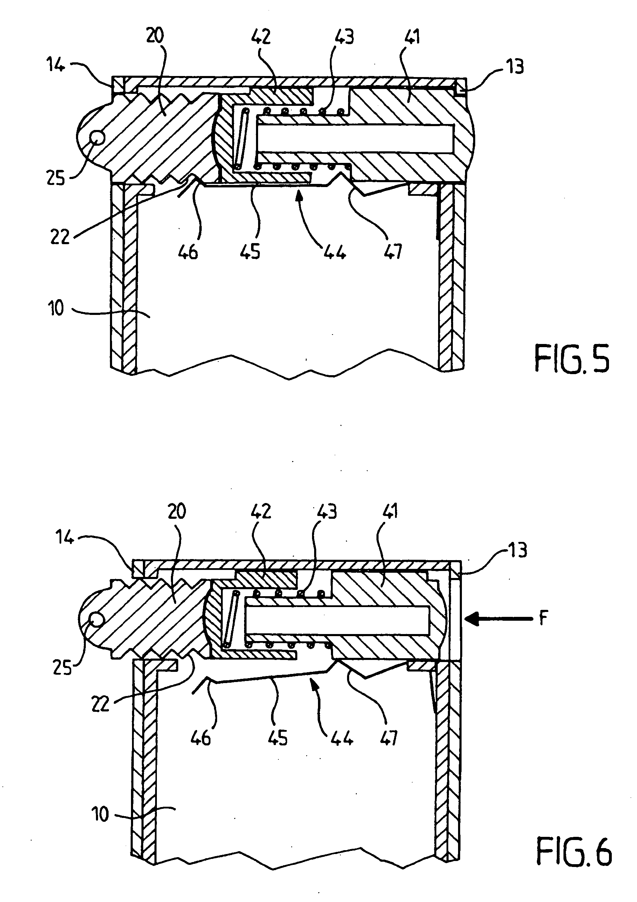

La lamelle ressort 45 comporte également une seconde dent 47 située entre ses deux extrémités 45a et 45b. Cette seconde dent 47 permet, en appuyant axialement sur le premier piston 41 selon la flèche F, d'écarter latéralement la lamelle ressort 45 de l'organe d'accrochage 20, comme illustré sur la figure 6. Ceci a pour effet de libérer la première dent 46 du cran 22 et d'éjecter l'organe d'accrochage 20 hors du corps principal 10.

Ainsi, le premier piston 41 constitue un bouton poussoir de manipulation accessible par un utilisateur depuis l'extérieur du corps principal 10.

Le premier piston 41 comporte un fût axial cylindrique 41a autour duquel est placée une partie du ressort de compression 43. Le second piston 42 présente quant à lui un logement axial cylindrique 42a recevant l'autre partie du ressort et à l'intérieur duquel peut coulisser le fût 41a. Ainsi, le ressort 43 est maintenu en position radiale entre le fût 41a et le logement 42a.

Le fourreau 11 du corps principal 10 présente une première butée 13 pour le blocage axial arrière du premier piston 41, et une seconde butée 14 pour le blocage axial avant du second piston 42.

L'organe d'accrochage 20 est muni, à son extrémité libre 20a, d'un anneau d'accrochage 25 à son extrémité libre et dans lequel passe le cordon 30.

Il va de soi que la description détaillée de l'objet de l'invention, donnée uniquement à titre d'illustration, ne constitue en aucune manière une limitation, les équivalents techniques étant également compris dans le champ de la présente invention.

## Revendications

1. Dispositif (1) d'accrochage d'un appareil de communication téléphonique sans fil, tel qu'un téléphone cellulaire ou une oreillette, comportant :
- un corps principal (10), destiné notamment à être relié à une ceinture de vêtement ou une sangle de sac,
- un organe d'accrochage (20) relié de manière amovible au corps principal (10) et sur lequel est accroché l'appareil de communication, et
- un système de blocage/déblocage dudit organe d'accrochage comportant au moins un premier (41) et un second (42) pistons coaxiaux coulissant dans un fourreau (11) du corps principal (10), un ressort de compression (43) reliant axialement les deux pistons (41, 42) et un moyen (44) permettant l'éjection de l'organe d'accrochage (20) ou le maintien de sa liaison au corps principal (10), l'éjection de l'organe d'accrochage (20) étant provoquée par une pression axiale exercée sur le premier piston (41), les deux pistons (41, 42) et l'organe d'accrochage (20) étant coaxiaux et de section circulaire, **caractérisé en ce que** le moyen d'éjection/maintien (44) est constitué par une lamelle ressort (45) en métal disposée sur latéralement et le long des pistons (41, 42) et localement sur un côté de l'organe d'accrochage (20), ladite lamelle (45) étant déformable élastiquement de manière radiale par rapport à ces derniers.

2. Dispositif selon la revendication 1, **caractérisé en ce que** la lamelle ressort (45) est fixée, à une de ses extrémités (45a), sur le corps principal (10) et présente, à son extrémité opposée (45b), une dent (46) venant en prise avec un cran (22) ménagé sur une surface périphérique de l'organe d'accrochage (20) de manière à bloquer ce dernier en translation.

3. Dispositif selon la revendication 2, **caractérisé en ce qu'**une seconde dent (47) est prévue sur la lamelle ressort (45), entre ses deux extrémités (45a, 45b), pour permettre d'écarter latéralement ladite lamelle de l'organe d'accrochage (20) suite à une pression sur le premier piston (41).

4. Dispositif selon la revendication 2 ou 3, **caractérisé en ce que** le premier piston (41) est un bouton poussoir de manipulation accessible par un utilisateur depuis l'extérieur du corps principal (10) de sorte qu'une pression axiale sur le bouton pression provoque la libération de la première dent (46) du cran (22) et l'éjection de l'organe d'accrochage (20).

5. Dispositif selon l'une quelconque des revendications précédentes, **caractérisé en ce que** le premier piston (41) comporte un fût axial cylindrique (41a) autour duquel est placée une partie du ressort de compression (43) et le second piston (42) présente un logement axial cylindrique (42a) recevant l'autre partie du ressort (43) et à l'intérieur duquel peut coulisser ledit fût (41a).

6. Dispositif selon l'une quelconque des revendications précédentes, **caractérisé en ce que** le fourreau (11) du corps principal présente une première butée (13) pour le blocage axial arrière du premier piston (41) et une seconde butée (14) pour le blocage axial avant du second piston (42).

7. Dispositif selon l'une quelconque des revendications précédentes, **caractérisé en ce que** l'organe d'accrochage (20) est muni d'un anneau d'accrochage (25) à son extrémité libre (20a).

## Claims

1. Device (1) for attaching a wireless telephone communications apparatus, such as a cellular telephone or an earphone, comprising:
- a main body (10), intended in particular to be connected to a garment waistband or a bag strap,
- an attachment member (20) which is connected removably to the main body (10) and to which the communications apparatus is attached, and
- a system for blocking/unblocking said attachment member and comprising at least a first (41) and a second (42) coaxial plunger sliding in a sleeve (11) of the main body (10), a compression spring (43) axially connecting the two plungers (41, 42) and a means (44) for ejecting the attachment member (20) or for maintaining its connection to the main body (10), the attachment member (20) being ejected by an axial pressure exerted on the first plunger (41), the two plungers (41, 42) and the attachment member (20) being coaxial and having a circular cross section, **characterized in that** the ejecting/maintaining means (44) consists of a metal leaf spring (45) located laterally on and along the plungers (41, 42) and locally on one side of the attachment member (20), said leaf (45) being elastically deformable radially with respect to said plungers and attachment member.

2. Device according to Claim 1, **characterized in that** the leaf spring (45) is fixed, at one of its ends (45a), to the main body (10) and has, at its opposite end (45b), a tooth (46) engaging with a notch (22) formed on a peripheral surface of the attachment member (20) so as to block the latter translationally.

3. Device according to Claim 2, **characterized in that** a second tooth (47) is provided on the leaf spring (45), between its two ends (45a, 45b), in order for said leaf to be spaced laterally apart from the attachment member (20) in response to a pressure on the first plunger (41).

4. Device according to Claim 2 or 3, **characterized in that** the first plunger (41) is a handling push button which can be accessed by a user from the outside of the main body (10) such that an axial pressure on the push button releases the first tooth (46) from the notch (22) and ejects the attachment member (20).

5. Device according to any one of the preceding claims, **characterized in that** the first plunger (41) comprises a cylindrical axial shaft (41a) around which part of the compression spring (43) is placed, and the second plunger (42) has a cylindrical axial housing (42a) which holds the other part of the spring (43) and inside which said shaft (41a) can slide.

6. Device according to any one of the preceding claims, **characterized in that** the sleeve (11) of the main body has a first stop (13) for axially blocking the first plunger (41) to the rear and a second stop (14) for axially blocking the second plunger (42) to the front.

7. Device according to any one of the preceding claims, **characterized in that** the attachment member (20) is provided with an attachment ring (25) at its free end (20a).

## Patentansprüche

1. Aufhängevorrichtung (1) für eine drahtlose Telekommunikationsvorrichtung wie ein Mobiltelefon oder einen Knopf im Ohr, umfassend:
- einen Hauptkörper (10), der insbesondere dazu vorgesehen ist, an einem Gürtel eines Bekleidungsstücks oder einem Tragegurt einer Tasche befestigt zu werden,
- ein Aufhängeelement (20), das abnehmbar an dem Hauptkörper (10) befestigt ist und an welchem die Telekommunikationsvorrichtung aufgehängt ist, und
- ein System zur Blockierung/Freigabe des Aufhängeelements, welches wenigstens einen ersten (41) und einen zweiten (42) koaxialen Kolben, die in einem Futteral (11) des Hauptkörpers (10) gleiten, eine Druckfeder (43), welche die beiden Kolben (41, 42) axial verbindet, und ein Mittel (44) umfasst, welches das Auswerfen des Aufhängeelements (20) oder das Halten von dessen Verbindung an dem Hauptkörper (10) erlaubt, wobei das Auswerfen des Aufhängeelements (20) durch einen axialen, auf den ersten Kolben (41) ausgeübten Druck ausgelöst wird. wobei die zwei Kolben (41, 42) und das Aufhängeelement (20) koaxial sind und einen kreisförmigen Querschnitt aufweisen, **dadurch gekennzeichnet, dass** das Mittel zum Auswerfen/Halten (44) aus einer Federzunge (45) aus Metall besteht, die seitlich auf und entlang der Kolben (41, 42) und örtlich auf einer Seite des Aufhängeelements (20) angeordnet ist, wobei die Zunge (45) radial im Verhältnis zu den letzteren elastisch verformbar ist.

2. Vorrichtung nach Anspruch 1, **dadurch gekennzeichnet, dass** die Federzunge (45) an einem ihrer Enden (45a) auf dem Hauptkörper (10) befestigt ist und an ihrem gegenüberliegenden Ende (45b) eine Zacke (46) aufweist, die mit einer auf einer Umfangsfläche des Aufhängeelements (20) ausgesparten Kerbe (22) derart in Eingriff gelangen kann, dass eine Verschiebung des Aufhängeelements blockiert wird.

3. Vorrichtung nach Anspruch 2, **dadurch gekennzeichnet, dass** eine zweite Zacke (47) auf der Federzunge (45) zwischen ihren beiden Enden (45a, 45b) vorgesehen ist, um ein seitliches Abdrängen der Zunge des Aufhängeelements (20) nach einem Druck auf den ersten Kolben (41) zu ermöglichen.

4. Vorrichtung nach Anspruch 2 oder 3, **dadurch gekennzeichnet, dass** der erste Kolben (41) ein Bedien-Druckknopf ist, der von der Außenseite des Hauptkörpers (10) für einen Benutzer zugänglich ist, so dass ein axialer Druck auf den Druckknopf die Freigabe der ersten Zacke (46) aus der Kerbe (22) und das Auswerfen des Aufhängeelements (20) auslöst.

5. Vorrichtung nach einem der vorhergehenden Ansprüche, **dadurch gekennzeichnet, dass** der erste Kolben (41) einen axialen zylindrischen Schaft (41 a) umfasst, um welchen ein Abschnitt der Druckfeder (43) platziert ist, und der zweite Kolben (42) eine axiale zylindrische Aufnahme (42a) aufweist, welche den anderen Abschnitt der Feder (43) aufnimmt, und in deren Innerem der Schaft (41a) gleiten kann.

6. Vorrichtung nach einem der vorhergehenden Ansprüche, **dadurch gekennzeichnet, dass** das Futteral (11) des Hauptkörpers einen ersten Anschlag (13) zur axialen Blockierung hinter dem ersten Kolben (41) und einen zweiten Anschlag (14) zur axialen Blockierung vor dem zweiten Kolben (42) aufweist.

7. Vorrichtung nach einem der vorhergehenden Ansprüche, **dadurch gekennzeichnet, dass** das Aufhängeelement (20) an seinem freien Ende (20a) mit einem Aufhängering (25) versehen ist.
